# EUROPEAN PATENT APPLICATION

(11) **EP 3 321 242 A1**
(43) Date of publication of application: **16.05.2018**
(21) Application number: 16821463.3
(22) Date of filing: 07.07.2016
(51) Int. Cl.: C04B 24/02, C04B 24/12, C04B 24/32, C04B 28/02

(54) **CEMENT ADDITIVE, CEMENT COMPOSITION, RAW MATERIAL FOR CEMENT ADDITIVE**

(30) Priority: 09.07.2015 JP 2015137412
(71) Applicant: Nippon Shokubai Co., Ltd., Osaka-shi, Osaka 541-0043 (JP)
(72) Inventor: TAKAYAMA, Takeshi, Suita-shi Osaka 564-8512 (JP); NISHIMURA, Kimiaki, Suita-shi Osaka 564-8512 (JP)
(74) Representative: Cabinet Plasseraud
(86) International application number: PCT/JP2016/070147
(87) International publication number: WO 2017/006995

(57) **Abstract**

Provided is a cement additive that can significantly improve the strength of a cured product of a cement composition over a long time period. Also provided is a cement composition including such cement additive. The cement additive of the present invention includes: a compound (A) having a weight-average molecular weight of more than 3,000, and having a structure in which 5 moles or more of an alkylene oxide is added to 1 mole of a polyhydric alcohol; and an alkanolamine compound (B).

## Description

### Technical Field

The present invention relates to a cement additive, a cement composition, and a raw material for a cement additive.

### Background Art

A cement composition, such as mortar or concrete, generally contains cement, an aggregate, and water, and preferably further contains a cement admixture for improving its fluidity to reduce its water content.

Recently, the cement composition has been frequently required to achieve an improvement in strength performance of a cured product thereof in addition to an improvement in water-reducing performance. For example, in some applications of the cement composition, the cement composition has been desired to express its strength at an early stage, and various investigations have been made to meet the desire (for example, Patent Literature 1).

In other applications of the cement composition, a long-term improvement in strength of the curedproduct of the cement composition (e.g., an improvement in strength over a time period at a level of 4 weeks) has started to be required.

### Citation List

### Patent Literature

[PTL 1] JP 2011-84459 A

### Summary of Invention

### Technical Problem

An object of the present invention is to provide a cement additive that can significantly improve the strength of a cured product of a cement composition over a long time period. Another object of the present invention is to provide a cement composition including such cement additive. Still another object of the present invention is to provide a raw material for a cement additive to be used in such cement additive.

### Solution to Problem

A cement additive according to one embodiment of the present invention includes:
a compound (A) having a weight-average molecular weight of more than 3,000, and having a structure in which 5 moles or more of an alkylene oxide is added to 1 mole of a polyhydric alcohol; and
an alkanolamine compound (B).

In one embodiment, a content of a total amount of the compound (A) and the alkanolamine compound (B) in the cement additive is from 50 wt% to 100 wt%.

In one embodiment, the content is from 95 wt% to 100 wt%.

In one embodiment, a ratio of the alkanolamine compound (B) to the compound (A) is from 1 wt% to 10,000 wt%.

In one embodiment, the ratio is from 5 wt% to 300 wt%.

In one embodiment, the ratio is from 10 wt% to 150 wt%.

In one embodiment, the weight-average molecular weight of the compound (A) is from 4,000 to 10,000,000.

In one embodiment, the weight-average molecular weight is from 10,000 to 700,000.

In one embodiment, the number of moles added of the alkylene oxide is from 10 to 100,000.

In one embodiment, the number of moles added of the alkylene oxide is from 30 to 5,000.

In one embodiment, the compound (A) includes at least one kind selected from polyethylene glycol, an alkylene oxide adduct of sorbitol, a copolymer having a structural unit derived from an alkylene oxide adduct of methacrylic acid, a copolymer having a structural unit derived from an alkylene oxide adduct of 3-methyl-3-butenyl alcohol, and an adduct of an alkylene oxide to active hydrogen bonded to an amino group of polyethyleneimine.

In one embodiment, the alkanolamine compound (B) includes at least one kind selected from triisopropanolamine, N,N,N',N'-tetrakis(2-hydroxypropyl)ethylenediamine, and diisopropanolethanolamine.

A cement composition according to one embodiment of the present invention includes the cement additive of the present invention.

A raw material for a cement additive according to one embodiment of the present invention includes the compound (A), and the raw material is used in the cement additive.

A raw material for a cement additive according to one embodiment of the present invention includes the alkanolamine compound (B), and the raw material is used in the cement additive.

### Advantageous Effects of Invention

According to the present invention, the cement additive that can significantly improve the strength of a cured product of a cement composition over a long time period can be provided. The cement composition including such cement additive can also be provided. The raw material for a cement additive to be used in such cement additive can also be provided.

### Description of Embodiments

In this description, the expression "(meth)acrylic" means "acrylic and/or methacrylic" , the expression " (meth) acrylate" means "acrylate and/or methacrylate", the expression " (meth) allyl" means "allyl and/or methallyl", and the expression " (meth) acrolein" means "acrolein and/or methacrolein". In addition, in this description, the expression "acid (salt)" means "an acid and/or a salt thereof" . As the salt, there are given, for example, alkali metal salts and alkaline earth metal salts, and specifically, there are given, for example, a sodium salt and a potassium salt.

### <<Cement Additive>>

A cement additive of the present invention includes : a compound (A) having a weight-average molecular weight of more than 3,000, and having a structure in which 5 moles or more of an alkylene oxide is added to 1 mole of a polyhydric alcohol; and an alkanolamine compound (B).

The compounds (A) may be used alone or in combination thereof.

The alkanolamine compounds (B) may be used alone or in combination thereof.

The cement additive of the present invention includes both the compound (A) and the alkanolamine compound (B), and hence expresses the following effect: the strength of a cured product of a cement composition can be significantly improved over a long time period. Specifically, the long-term improving effect on the strength of the cured product of the cement composition that can be expressed by the present invention shows a significantly high synergistic effect as compared to an effect expected from the sum of a long-term improving effect on the strength of the cured product of the cement composition derived only from the compound (A) and a long-term improving effect on the strength of the cured product of the cement composition derived only from the alkanolamine compound (B) .

The content of a total amount of the compound (A) and the alkanolamine compound (B) in the cement additive of the present invention is preferably from 50 wt% to 100 wt%, more preferably from 70 wt% to 100 wt%, still more preferably from 90 wt% to 100 wt%, particularly preferably from 95 wt% to 100 wt%, most preferably substantially 100 wt%. That is, the cement additive of the present invention is most preferably formed of the compound (A) and the alkanolamine compound (B).

The content of the compound (A) and the alkanolamine compound (B) in the cement additive of the present invention is preferably from 0.0001 wt% to 10 wt%, more preferably from 0.001 wt% to 5 wt%, still more preferably from 0.003 wt% to 3 wt%, even still more preferably from 0.005 wt% to 1 wt%, even yet still more preferably from 0.01 wt% to 0.7 wt%, particularly preferably from 0.05 wt% to 0.5 wt%, most preferably from 0.1 wt% to 0.3 wt% with respect to the cement composition. When the content of the compound (A) and the alkanolamine compound (B) in the cement additive of the present invention is adjusted within the range, the cement additive of the present invention can more significantly improve the strength of the cured product of the cement composition over a long time period. When the content of the compound (A) and the alkanolamine compound (B) is less than 0.0001 wt% with respect to the cement composition, the cement additive of the present invention may hardly improve the strength of the cured product of the cement composition over a long time period.

The ratio of the alkanolamine compound (B) to the compound (A) in the cement additive of the present invention is, as a lower limit value, preferably 1 wt% or more, more preferably 5 wt% or more, still more preferably 10 wt% or more, even still more preferably 15 wt%, even yet still more preferably 20 wt% or more, particularly preferably 30 wt% or more, most preferably 50 wt% or more, and is, as an upper limit value, preferably10,000 wt% orless, more preferably 1,000 wt% or less, still more preferably 500 wt% or less, even still more preferably 300 wt% or less, even yet still more preferably 200 wt% or less, particularly preferably 150 wt% or less, most preferably 100 wt% or less. When the ratio of the alkanolamine compound (B) to the compound (A) in the cement additive of the present invention is adjusted within the range, the cement additive of the present invention can more significantly improve the strength of the cured product of the cement composition over a long time period.

### <Compound (A) >

The compound (A) has a weight-average molecular weight of more than 3,000, and has the structure in which 5 moles or more of the alkylene oxide is added to 1 mole of the polyhydric alcohol.

The alkylene oxide is preferably an alkylene oxide having 2 to 10 carbon atoms, more preferably an alkylene oxide having 2 to 8 carbon atoms, still more preferably an alkylene oxide having 2 to 6 carbon atoms, particularly preferably an alkylene oxide having 2 to 4 carbon atoms, most preferably an alkylene oxide having 2 or 3 carbon atoms (i.e., ethylene oxide or propylene oxide) because the effects of the present invention can be further expressed. In addition, the alkylene oxides may be used alone or in combination thereof.

The number of moles added of the alkylene oxide with respect to 1 mole of the polyhydric alcohol is, as a lower limit value, preferably 10 moles or more, more preferably 20 moles or more, still more preferably 30 moles or more, even still more preferably 40 moles or more, even yet still more preferably 50 moles or more, even yet still more preferably 100 moles or more, particularly preferably 500 moles or more, most preferably 1,000 moles or more, and is, as an upper limit value, preferably 100,000 moles or less, more preferably 50,000 moles or less, still more preferably 40,000 moles or less, even still more preferably 30,000 moles or less, even yet still more preferably 20,000 moles or less, even yet still more preferably 10,000 moles or less, particularly preferably 7,000 moles or less, most preferably 5,000 moles or less. When the number of moles added of the alkylene oxide with respect to 1 mole of the polyhydric alcohol is adjusted within the range, the cement additive of the present invention can more significantly improve the strength of the cured product of the cement composition over a long time period.

The weight-average molecular weight of the compound (A) is, as a lower limit value, preferably 4,000 or more, more preferably 5,000 or more, still more preferably 10,000 or more, particularly preferably 20,000 or more, most preferably 100,000 or more, and is, as an upper limit value, preferably 10,000,000 or less, more preferably 5,000,000 or less, still more preferably 3,000,000 or less, particularly preferably 700,000 or less, most preferably 300,000 or less. When the weight-average molecular weight of the compound (A) is adjusted within the range, the cement additive of the present invention can more significantly improve the strength of the cured product of the cement composition over a long time period. A method of measuring the weight-average molecular weight is described later.

The polyhydric alcohol only needs to be a compound having 2 or more hydroxyl groups, and may be a low-molecular weight compound or a polymer, and any appropriate polyhydric alcohol may be adopted to the extent that the effects of the present invention are not impaired. Such polyhydric alcohol is preferably a dihydric to 500-hydric alcohol, more preferably a dihydric to 100-hydric alcohol, still more preferably a trihydric to 50-hydric alcohol. Examples of such polyhydric alcohol include ethylene glycol, propylene glycol, diethylene glycol, triethylene glycol, dipropylene glycol, tripropylene glycol, neopentyl glycol, pentanediol, butanediol, glycerin, and sorbitol.

A further example of the polyhydric alcohol is a polyhydric alcohol obtained by polymerizing a monomer having a hydroxyl group. Examples of the monomer having a hydroxyl group include vinyl alcohol, allyl alcohol, methallyl alcohol, butenyl alcohol, 3-methyl-3-butenyl alcohol, 3-methyl-2-butenyl alcohol, and 2-methyl-3-butenyl alcohol. Those monomers may be polymerized alone, or may be copolymerized with any other polymerizable monomer.

The compound (A) may have any appropriate functional group to the extent that the effects of the present invention are not impaired. However, the compound (A) is preferably free of a carboxyl group because the effects of the present invention can be sufficiently expressed.

Any appropriate method, such as a known method, may be adopted as a method of synthesizing the compound (A) to the extent that the effects of the present invention are not impaired. Examples of such method include: a method involving polymerizing a monomer having a hydroxyl group and then adding an alkylene oxide to the resultant; and a method involving adding the alkylene oxide to the monomer having a hydroxyl group in advance and then polymerizing the resultant.

Specific examples of the compound (A) include polyethylene glycol, a copolymer having a structural unit derived from an alkylene oxide adduct of methacrylic acid, an alkylene oxide adduct of sorbitol, a copolymer having a structural unit derived from an alkylene oxide adduct of 3-methyl-3-butenyl alcohol, and an adduct of an alkylene oxide to active hydrogen bonded to an amino group of polyethyleneimine . The term " an adduct of an alkylene oxide to active hydrogen bonded to an amino group of polyethyleneimine " as used herein refers to an adduct in which an alkylene oxide (e.g., ethylene oxide) is added in any appropriate addition number of moles to the active hydrogen bonded to the amino group of the polyethyleneimine.

When the compound (A) is the copolymer having a structural unit derived from the alkylene oxide adduct of 3-methyl-3-butenyl alcohol, the copolymer is preferably free of a carboxyl group or a salt thereof (e.g., an alkali metal salt or an alkaline earth metal salt) because the effects of the present invention can be further expressed.

### <Alkanolamine Compound (B)>

Any appropriate alkanolamine compound may be adopted as the alkanolamine compound (B) to the extent that the effects of the present invention are not impaired. Examples of such alkanolamine compound include a low molecular-type alkanolamine compound and a polymer-type alkanolamine compound.

Examples of the low molecular-type alkanolamine compound include monoethanolamine, diethanolamine, triethanolamine, monoisopropanolamine, diisopropanolamine, triisopropanolamine, methylethanolamine, methylisopropanolamine, methyldiethanolamine, methyldiisopropanolamine, diethanolisopropanolamine, diisopropanolethanolamine, tetrahydroxyethylethylenediamine, N,N-bis(2-hydroxyethyl)2-propanolamine, N,N-bis(2-hydroxypropyl)-N-(hydroxyethyl)amine, N,N-bis(2-hydroxyethyl)-N-(2-hydroxypropyl)amine, N,N,N',N'-tetrakis(2-hydroxypropyl)ethylenediamine, and tris(2-hydroxybutyl)amine. Of those, triisopropanolamine, N,N,N',N'-tetrakis(2-hydroxypropyl)ethylenediamine, and diisopropanolethanolamine are each preferred as the low molecular-type alkanolamine compound. Another example of the low molecular-type alkanolamine compound is a monomer having a skeleton of triisopropanolamine.

An example of the polymer-type alkanolamine compound is an alkanolamine having a structure in which part of an alkanolamine is bonded to a polymer . An example of such polymer-type alkanolamine compound is a polymer having a skeleton of triisopropanolamine.

### <<Cement Composition>>

A cement composition of the present invention includes the cement additive of the present invention.

In addition to the cement additive of the present invention, the cement composition of the present invention preferably includes cement, water, and an aggregate, and more preferably includes the cement, water, the aggregate, and a cement admixture.

Any appropriate aggregate, such as a fine aggregate (e.g., sand) or a coarse aggregate (e.g., a crushed stone), may be adopted as the aggregate. Examples of such aggregate include gravel, a crushed stone, a water-granulated slag, and a recycled aggregate. Further examples of such aggregate include silica stone, clay, zircon, high alumina, silicon carbide, graphite, chromium, chrome magnesite, and magnesia refractory aggregates.

The cement admixture preferably contains a polymer for a cement admixture because the effects of the present invention can be more effectively expressed.

An example of the polymer for a cement admixture is a cement dispersant. The cement dispersants may be used alone or in combination thereof.

Examples of the cement dispersant include a sulfonic acid-based dispersant having a sulfonic acid group in a molecule thereof, and a polycarboxylic acid-based dispersant.

Examples of the sulfonic acid-based dispersant include: polyalkylarylsulfonic acid salt-type sulfonic acid-based dispersants, such as a naphthalenesulfonic acid formaldehyde condensate, a methylnaphthalenesulfonic acid formaldehyde condensate, and an anthracenesulfonic acid formaldehyde condensate; melamine formalin resin sulfonic acid salt-type sulfonic acid-based dispersants, such as a melaminesulfonic acid formaldehyde condensate; aromatic aminosulfonic acid salt-type sulfonic acid-based dispersants, such as an aminoarylsulfonic acid-phenol-formaldehyde condensate; ligninsulfonic acid salt-type sulfonic acid-based dispersants, such as a ligninsulfonic acid salt and a modified ligninsulfonic acid salt; and polystyrenesulfonic acid salt-type sulfonic acid-based dispersants.

The cement admixture may contain any appropriate other cement additive (material) to the extent that the effects of the present invention are not impaired. Examples of such other cement additive (material) include such other cement additives (materials) as listed in the following (1) to (12). Any appropriate blending ratio may be adopted as a blending ratio between the polymer for a cement admixture and such other cement additive (material) that may be incorporated into the cement admixture in accordance with the kind and purpose of the other cement additive (material) to be used.
(1) Water-soluble polymer substance: nonionic cellulose ethers, such as methyl cellulose, ethyl cellulose, and carboxymethyl cellulose; polysaccharides produced through microorganism fermentation, such as yeast glucan, xanthan gum, and β-1, 3 glucan; polyacrylamide; and the like.
(2) Polymer emulsion: copolymers of various vinyl monomers, such as an alkyl (meth)acrylate, and the like.
(3) Hardening retarder: oxycarboxylic acids, such as gluconic acid, glucoheptonic acid, arabonic acid, malic acid, and citric acid, or salts thereof; sugars and sugar alcohols; polyhydric alcohols, such as glycerin; phosphonic acids, such as aminotri(methylenephosphonic acid), and derivatives thereof; and the like.
   The ratio of the hardening retarder to the compound (A) is preferably from 1 wt% to 1,000 wt%, more preferably from 2 wt% to 700 wt%, still more preferably from 5 wt% to 500 wt%, particularly preferably from 10 wt% to 300 wt%, most preferably from 20 wt% to 200 wt%.
(4) High early strength agent and accelerator: soluble calcium salts, such as calcium chloride, calcium nitrite, calcium nitrate, calciumbromide, and calcium iodide; chlorides, such as iron chloride and magnesium chloride; sulfuric acid salts; potassium hydroxide; sodium hydroxide; carbonic acid salts; thiosulfuric acid salts; formic acid and formic acid salts, such as calcium formate; alkanolamines; alumina cement; calcium aluminate silicate; and the like.
(5) Oxyalkylene-based defoaming agent: polyoxyalkylene alkyl ethers, such as diethylene glycol heptyl ether; polyoxyalkylene acetylene ethers; (poly)oxyalkylene fatty acid esters; polyoxyalkylene sorbitan fatty acid esters; polyoxyalkylene alkyl (aryl) ether sulfuric acid ester salts; polyoxyalkylene alkyl phosphoric acid esters; polyoxyalkylene alkyl amines, such as polyoxypropylene polyoxyethylene lauryl amine (e.g., propylene oxide 1 mole to 20 mole adduct and ethylene oxide 1 mole to 20 mole adduct) and an amine derived from a fatty acid obtained from hardened beef tallow having an alkylene oxide added thereto (e.g., propylene oxide 1 mole to 20 mole adduct or ethylene oxide 1 mole to 20 mole adduct); polyoxyalkylene amides; and the like.
(6) Defoaming agent except oxyalkylene-based defoaming agent: mineral oil-based, oil and fat-based, fatty acid-based, fatty acid ester-based, alcohol-based, amide-based, phosphoric acid ester-based, metal soap-based, and silicone-based defoaming agents.
(7) AE agent: a resin soap, a saturated or unsaturated fatty acid, sodium hydroxystearate, lauryl sulfate, an alkylbenzene sulfonic acid (ABS), an alkane sulfonate, a polyoxyethylene alkyl (phenyl) ether, a polyoxyethylene alkyl (phenyl) ether sulfuric acid ester or salts thereof, a polyoxyethylene alkyl (phenyl) ether phosphoric acid ester or salts thereof, a protein material, an alkenyl sulfosuccinic acid, an α-olefin sulfonate, and the like.
(8) Other surfactant: various anionic surfactants; various cationic surfactants, such as an alkyltrimethylammonium chloride; various nonionic surfactants; various ampholytic surfactants; and the like.
(9) Waterproof agent: a fatty acid (salt), a fatty acid ester, an oil and fat, silicon, paraffin, asphalt, a wax, and the like.
(10) Antirust agent: a nitrous acid salt, a phosphoric acid salt, zinc oxide, and the like.
(11) Crack reducing agent: a polyoxyalkyl ether and the like.
(12) Expansion material: ettringite-based and coal-based expansion materials and the like.

Examples of the other known cement additives (materials) may include a cement moisturizer, a thickener, a separation reducing agent, a flocculant, a dry shrinkage reducing agent, a strength improving agent, a self-leveling agent, an antirust agent, a colorant, and a fungicide. Those known cement additives (materials) may be used alone or in combination thereof.

Any appropriate cement may be adopted as the cement in the cement composition of the present invention. Examples of such cement include portland cements (ordinary, high early strength, ultrahigh early strength, moderate heat, and sulfate resistant portland cements, and low alkali forms thereof), various mixed cements (blast furnace cement, silica cement, and fly ash cement), white portland cement, alumina cement, ultrarapid hardening cements (one-clinker rapid hardening cement, two-clinker rapid hardening cement, and magnesium phosphate cement), cement for grout, oil well cement, low-heat-generating cements (low-heat-generation-type blast furnace cement, fly ash-mixed low-heat-generation-type blast furnace cement, and belite-rich cement), ultrahigh strength cement, cement-based solidification materials, and eco-cements (cement manufactured from one or more kinds of municipal solid waste incineration ash and sewage sludge incineration ash as raw materials). Further, fine powder, such as blast furnace slag, fly ash, cinder ash, clinker ash, husk ash, silica powder, or limestone powder, or plaster may be added to the cement composition of the present invention. The cements in the cement composition of the present invention may be used alone or in combination thereof.

In the cement composition of the present invention, a unit amount of water per 1 m³ thereof, a cement usage amount per 1 m³ thereof, and a water/cement ratio may be set to any appropriate values. Such values are as follows: it is preferred that the unit amount of water be from 100 kg/m³ to 185 kg/m³, the cement usage amount be from 250 kg/m³ to 800 kg/m³, and the water/cement ratio (weight ratio) be from 0.1 to 0.7; and it is more preferred that the unit amount of water be from 120 kg/m³ to 175 kg/m³, the cement usage amount be from 270 kg/m³ to 800 kg/m³, and the water/cement ratio (weight ratio) be from 0.12 to 0.65. Thus, the cement composition of the present invention can be used in a wide variety of concrete ranging from poor-mix concrete to rich-mix concrete, and is effective for each of high-strength concrete having a large unit cement content and poor-mix concrete having a unit cement content of 300 kg/m³ or less.

When the cement composition of the present invention includes the polymer for a cement admixture, any appropriate content may be adopted as the content of the polymer for a cement admixture in the cement composition of the present invention in accordance with purposes. With regard to such content, when the polymer is used in, for example, mortar or concrete using hydraulic cement, the content of the polymer for a cement admixture with respect to 100 parts by weight of the cement is preferably from 0.01 part by weight to 10 parts by weight, more preferably from 0.02 part by weight to 5 parts by weight, still more preferably from 0.05 part by weight to 3 parts by weight. When such content is adopted, various preferred effects, such as a reduction in unit amount of water of the cement composition, the enhancement of the strength thereof, and an improvement in durability thereof, are obtained. When the content is less than 0.01 part by weight, the polymer may be unable to express sufficient performance. When the content is more than 10 parts by weight, an effect that can be expressed by the polymer may substantially hit its ceiling to cause a disadvantage in terms of economical efficiency.

Any appropriate content may be adopted as the content of the cement admixture in the cement composition of the present invention in accordance with purposes. With regard to such content, the content of the cement admixture with respect to 100 parts by weight of the cement is preferably from 0.01 part by weight to 10 parts by weight, more preferably from 0.05 part by weight to 8 parts by weight, still more preferably from 0.1 part by weight to 5 parts by weight. When the content is less than 0.01 part by weight, the cement admixture may be unable to express sufficient performance. When the content is more than 10 parts by weight, an effect that can be expressed by the cement admixture may substantially hit its ceiling to cause a disadvantage in terms of economical efficiency.

The cement composition of the present invention can be effective for ready-mixed concrete, concrete for a concrete secondary product, concrete for centrifugal molding, concrete for vibrating compaction, steam-cured concrete, spray concrete, and the like. The cement composition of the present invention can also be effective for mortar or concrete requiring high fluidity, such as medium fluidity concrete (concrete having a slump value of from 22 cm to 25 cm), high fluidity concrete (concrete having a slump value of 25 cm or more and a slump flow value of from 50 cm to 70 cm), self-compacting concrete, or a self-leveling material.

The cement composition of the present invention only needs to be prepared through the blending of its constituent components by any appropriate method. For example, a method involving kneading the constituent components in a mixer is available.

### <<Raw Material for Cement Additive>>

A raw material for a cement additive of the present invention is used in the cement additive of the present invention.

One raw material for a cement additive of the present invention is the compound (A). That is, a compound that is the compound (A) and is used in the cement additive of the present invention is the raw material for a cement additive of the present invention.

Another raw material for a cement additive of the present invention is the alkanolamine compound (B). That is, a compound that is the alkanolamine compound (B) and is used in the cement additive of the present invention is the raw material for a cement additive of the present invention.

### Examples

The present invention is described in more detail below by way of Examples, but the present invention is not limited to these Examples. "Part (s) " means "part (s) by weight" and "%" means "wt%" unless otherwise specified.

### <Conditions for Analysis of Weight-average Molecular Weight>

- Used column: One TSK guard column α, one TSKgel α-5000, one TSKgel α-4000, and one TSKgel α-3000 each manufactured by Tosoh Corporation were connected and used.
- Eluent: A solution obtained by mixing a solution, which had been obtained by dissolving 62.4 g of sodium dihydrogen phosphate 2H₂O and 143.3 g of disodium hydrogen phosphate 12H₂O in 7,794.3 g of ion-exchanged water, with 2,000 g of acetonitrile was used.
- Detector: A triple detector "Model 302 Light Scattering Detector" manufactured by Viscotek was used under the conditions of a scattering angle for right-angle light scattering of 90°, a scattering angle for low-angle light scattering of 7°, a cell volume of 18 µL, and a wavelength of 670 nm.
- Standard sample: Polyethylene glycol SE-8 (Mw=107,000) manufactured by Tosoh Corporation was used, and an apparatus constant was determined by setting the dn/dC of the polyethylene glycol to 0.135 ml/g and the refractive index of the eluent to 1.333.
- Injection volume
   Standard sample: 100 µL of a solution obtained by dissolving the standard sample in the eluent so that a polymer concentration became 0.2 vol% was injected.
   Sample: 100 µL of a solution obtained by dissolving a sample in the eluent so that a polymer concentration became 1.0 vol% was injected.
- Flow rate: 0.8 ml/min
- Column temperature: 40°C

### <Concrete Test>

Ordinary portland cement (manufactured by Taiheiyo Cement Corporation), land sand produced in the Oi River system, a crushed stone produced in Aomi, and tap water were used as cement, a fine aggregate, a coarse aggregate, and kneading water, respectively to prepare a concrete composition according to the following formulation: a cement amount of 382 kg/m³, a water amount of 172 kg/m³, a fine aggregate amount of 796 kg/m³, a coarse aggregate amount of 930 kg/m³, a fine aggregate ratio (fine aggregate/fine aggregate+coarse aggregate) (volume ratio) of 47%, and a water/cement ratio (weight ratio) of 0.45. In order to set the temperature of the concrete composition to a test temperature of 20°C, the materials, a forced mixer, and measuring instruments to be used in a test were subjected to temperature control under an atmosphere at the test temperature, and kneading and each measurement were performed under the atmosphere at the test temperature. In addition, in order to avoid the influences of air bubbles in the concrete composition on the fluidity of the concrete composition, an oxyalkylene-based defoaming agent was used as required to adjust an air amount in the concrete composition to 1.0±0.5%.

The forced mixer was used under the above-mentioned conditions for a kneading time of 90 seconds to produce concrete, and its slump value, flow value, and air amount were measured. The measurement of each of the slump value, the flow value, and the air amount was performed in conformity with Japanese Industrial Standards (JIS-A-1101 and 1128) . In addition, the addition amount of a cement dispersant was set to such an addition amount that the flow value became from 37.5 cm to 42.5 cm.

### <Measurement of Compressive Strength>

After the kneading, the flow value and the air amount were measured, and a sample for a compressive strength test was produced, followed by the measurement of its compressive strength 28 days after the initiation of its curing under the following conditions.
Sample production: 100 mm×200 mm
Sample curing (28 days): The sample was subjected to constant-temperature, constant-humidity air curing at a temperature of about 20°C and a humidity of 60% for 24 hours, and was then cured in water for 27 days.
Sample polishing: The polishing of the surface of the sample (with a sample polishing finisher).
Compressive strength measurement: An automatic compressive strength-measuring device (manufactured by Mayekawa MFG. Co., Ltd.)

### [Production Example 1] : Production of Polymer for Cement Admixture

80.0 Parts of ion-exchanged water was loaded into a reaction vessel made of glass including a Dimroth condenser, a stirrer with a stirring blade and a stirring seal made of Teflon (trademark), a nitrogen-introducing tube, and a temperature sensor, and was warmed to 70°C under stirring at 250 rpm while nitrogen was introduced at 200 mL/min. Next, a mixed solution of 133.4 parts of methoxy polyethylene glycol monomethacrylic acid ester (average number of moles added of ethylene oxide: 9), 26.6 parts of methacrylic acid, 1.53 parts of mercaptopropionic acid, and 106.7 parts of ion-exchanged water was dropped into the vessel over 4 hours. Simultaneously with the dropping, a mixed solution of 1.19 parts of ammonium persulfate and 50.6 parts of ion-exchanged water was dropped into the vessel over 5 hours. After the completion of the dropping, the temperature in the vessel was kept at 70°C for 1 hour to complete a polymerization reaction. Then, the resultant was neutralized with an aqueous solution of sodium hydroxide. Thus, an aqueous solution of a copolymer (1) having a weight-average molecular weight of 100,000 was obtained.

### [Production Example 2] : Production of Polymer for Cement Admixture

198.2 Parts of a product obtained by adding ethylene oxide to the hydroxyl group of 3-methyl-3-buten-1-ol (isoprenol) (average number of moles added of ethylene oxide: 50) (hereinafter referred to as "IPN-50") (80% aqueous solution), 0.32 part of acrylic acid, 12.47 parts of hydrogen peroxide water (2% aqueous solution), and 44.75 parts of ion-exchanged water were loaded into a reaction vessel made of glass including a Dimroth condenser, a stirrer with a stirring blade and a stirring seal made of Teflon (trademark), a nitrogen-introducing tube, and a temperature sensor, and the mixture was warmed to 58°C under stirring at 250 rpm while nitrogen was introduced at 200 mL/min. Next, a mixed solution formed of 27.12 parts of acrylic acid and 108.5 parts of ion-exchanged water was dropped into the vessel over 3 hours. Simultaneously with the dropping, a mixed solution formed of 0.74 part of L-ascorbic acid, 1.61 parts of 3-mercaptopropionic acid, and 86.31 parts of ion-exchanged water was dropped into the vessel over 3 hours and 30 minutes. After the completion of the dropping, the temperature in the vessel was kept at 58°C for 1 hour to complete a polymerization reaction. Then, the resultant was neutralized with an aqueous solution of sodium hydroxide. Thus, an aqueous solution of a copolymer (2) having a weight-average molecular weight of 140,000 was obtained.

### [Production Example 3]

103.7 Parts of ion-exchanged water was loaded into a reaction vessel made of glass including a Dimroth condenser, a stirrer with a stirring blade and a stirring seal made of Teflon (trademark), a nitrogen-introducing tube, and a temperature sensor, and was warmed to 70°C under stirring at 250 rpm while nitrogen was introduced at 200 mL/min. Next, a mixed solution formed of 188 parts of IPN-50 (80% aqueous solution), 9.6 parts of acrylamide, and 53.07 parts of ion-exchanged water was dropped into the vessel over 4 hours. Simultaneously with the dropping, a mixed solution formed of 0.13 part of 3-mercaptopropionic acid and 29.47 parts of ion-exchanged water, and a mixed solution of 0.48 part of ammonium persulfate and 15.55 parts of ion-exchanged water were each dropped into the vessel over 5 hours. After the completion of the dropping, the temperature in the vessel was kept at 70°C for 1 hour to complete a polymerization reaction. Then, the resultant was neutralized with an aqueous solution of sodium hydroxide. Thus, an aqueous solution of a copolymer (3) having a weight-average molecular weight of 130,000 was obtained.

### [Production Example 4]

117.3 Parts of ion-exchanged water was loaded into a reaction vessel made of glass including a Dimroth condenser, a stirrer with a stirring blade and a stirring seal made of Teflon (trademark), a nitrogen-introducing tube, and a temperature sensor, and was warmed to 70°C under stirring at 250 rpm while nitrogen was introduced at 200 mL/min. Next, a mixed solution formed of 188 parts of IPN-50 (80% aqueous solution), 9.6 parts of acrylamide, and 53.07 parts of ion-exchanged water was dropped into the vessel over 4 hours. Simultaneously with the dropping, a mixed solution of 0.48 part of ammonium persulfate and 31.59 parts of ion-exchanged water was dropped into the vessel over 5 hours. After the completion of the dropping, the temperature in the vessel was kept at 70°C for 1 hour to complete a polymerization reaction. Then, the resultant was neutralized with an aqueous solution of sodium hydroxide. Thus, an aqueous solution of a copolymer (4) having a weight-average molecular weight of 210,000 was obtained.

### [Production Example 5]

103.7 Parts of ion-exchanged water was loaded into a reaction vessel made of glass including a Dimroth condenser, a stirrer with a stirring blade and a stirring seal made of Teflon (trademark), a nitrogen-introducing tube, and a temperature sensor, and was warmed to 70°C under stirring at 250 rpm while nitrogen was introduced at 200 mL/min. Next, a mixed solution formed of 180 parts of IPN-50 (80% aqueous solution), 16.0 parts of hydroxyethyl acrylate, and 44.0 parts of ion-exchanged water was dropped into the vessel over 4 hours. Simultaneously with the dropping, a mixed solution formed of 0.06 part of 3-mercaptopropionic acid and 40.2 parts of ion-exchanged water, and a mixed solution formed of 1.98 parts of ammonium persulfate and 64.05 parts of ion-exchanged water were each dropped into the vessel over 5 hours. After the completion of the dropping, the temperature in the vessel was kept at 70°C for 1 hour to complete a polymerization reaction. Then, the resultant was neutralized with an aqueous solution of sodium hydroxide. Thus, an aqueous solution of a copolymer (5) having a weight-average molecular weight of 350,000 was obtained.

### [Production Example 6]

143.97 Parts of ion-exchanged water was loaded into a reaction vessel made of glass including a Dimroth condenser, a stirrer with a stirring blade and a stirring seal made of Teflon (trademark), a nitrogen-introducing tube, and a temperature sensor, and was warmed to 70°C under stirring at 250 rpm while nitrogen was introduced at 200 mL/min. Next, a mixed solution formed of 180 parts of IPN-50 (80% aqueous solution), 16.0 parts of hydroxyethyl acrylate, and 44.0 parts of ion-exchanged water was dropped into the vessel over 4 hours. Simultaneously with the dropping, a mixed solution formed of 1.98 part of ammonium persulfate and 64.05 parts of ion-exchanged water was dropped into the vessel over 5 hours . After the completion of the dropping, the temperature in the vessel was kept at 70°C for 1 hour to complete a polymerization reaction. Then, the resultant was neutralized with an aqueous solution of sodium hydroxide. Thus, an aqueous solution of a copolymer (6) having a weight-average molecular weight of 740,000 was obtained.

### [Production Example 7]

80.0 Parts of ion-exchanged water was loaded into a reaction vessel made of glass including a Dimroth condenser, a stirrer with a stirring blade and a stirring seal made of Teflon (trademark), a nitrogen-introducing tube, and a temperature sensor, and was warmed to 70°C under stirring at 250 rpm while nitrogen was introduced at 200 mL/min. Next, a mixed solution formed of 80.0 parts of a product obtained by adding ethylene oxide to methacrylic acid (average number of moles added of ethylene oxide: 8) (manufactured by NOF Corporation, PE-350) and 88.0 parts of ion-exchanged water was dropped into the vessel over 4 hours. Simultaneously with the dropping, a mixed solution formed of 0.58 part of 3-mercaptopropionic acid and 122.0 parts of ion-exchanged water, and a mixed solution formed of 0.37 part of ammonium persulfate and 37.09 parts of ion-exchanged water were each dropped into the vessel over 5 hours. After the completion of the dropping, the temperature in the vessel was kept at 70°C for 1 hour to complete a polymerization reaction. Then, the resultant was neutralized with an aqueous solution of sodium hydroxide. Thus, an aqueous solution of a polymer (7) having a weight-average molecular weight of 130,000 was obtained.

### [Production Example 8]

80.0 Parts of ion-exchanged water was loaded into a reaction vessel made of glass including a Dimroth condenser, a stirrer with a stirring blade and a stirring seal made of Teflon (trademark), a nitrogen-introducing tube, and a temperature sensor, and was warmed to 70°C under stirring at 250 rpm while nitrogen was introduced at 200 mL/min. Next, a mixed solution formed of 160.0 parts of a product obtained by adding ethylene oxide to methacrylic acid (average number of moles added of ethylene oxide: 8) (manufactured by NOF Corporation, PE-350), 3.87 partsof 3-mercaptopropionic acid, and 106.7 parts of ion-exchanged water was dropped into the vessel over 4 hours. Simultaneously with the dropping, a mixed solution formed of 0.749 part of ammonium persulfate and 48.71 parts of ion-exchanged water was dropped into the vessel over 5 hours . After the completion of the dropping, the temperature in the vessel was kept at 70°C for 1 hour to complete a polymerization reaction. Then, the resultant was neutralized with an aqueous solution of sodium hydroxide. Thus, an aqueous solution of a copolymer (8) having a weight-average molecular weight of 20,000 was obtained.

### [Example 1]

PEG 500,000 (polyethylene glycol, manufactured by Wako Pure Chemical Industries, Ltd., weight-average molecular weight=500,000) and triisopropanolamine (TIPA, manufactured by Wako Pure Chemical Industries, Ltd.) were blended under a condition shown in Table 1 to prepare a cement additive (1).

### [Example 2]

PEG 3,400 (polyethylene glycol, manufactured by Wako Pure Chemical Industries, Ltd., weight-average molecular weight=3,400) and TIPA were blended under a condition shown in Table 1 to prepare a cement additive (2) .

### [Example 3]

PEG 5,000 (polyethylene glycol, manufactured by Sigma-Aldrich, weight-average molecular weight=5,000) and hydroxyethyldiisopropanolamine (EDIPA, manufactured by Sigma-Aldrich) were blended under a condition shown in Table 1 to prepare a cement additive (3).

### [Example 4]

PEG 6,000 (polyethylene glycol, manufactured by Wako Pure Chemical Industries, Ltd., weight-average molecular weight=6,000) and EDIPA were blended under a condition shown in Table 1 to prepare a cement additive (4).

### [Example 5]

The copolymer (3) and TIPA were blended under a condition shown in Table 1 to prepare a cement additive (5).

### [Example 6]

The copolymer (3) and TIPA were blended under a condition shown in Table 1 to prepare a cement additive (6).

### [Example 7]

The copolymer (4) and EDIPA were blended under a condition shown in Table 1 to prepare a cement additive (7).

### [Example 8]

The copolymer (4) and EDIPA were blended under a condition shown in Table 1 to prepare a cement additive (8).

### [Example 9]

The copolymer (5) and TIPA were blended under a condition shown in Table 1 to prepare a cement additive (9).

### [Example 10]

The copolymer (6) and EDIPA were blended under a condition shown in Table 1 to prepare a cement additive (10).

### [Example 11]

The polymer (7) and TIPA were blended under a condition shown in Table 1 to prepare a cement additive (11).

### [Example 12]

The copolymer (8) and EDIPA were blended under a condition shown in Table 1 to prepare a cement additive (12).

### [Example 13]

ESP (weight-average molecular weight=23,000, a product obtained by adding 20 moles of ethylene oxide to 1 mole of active hydrogen of an amino group of polyethyleneimine (weight-average molecular weight=600)) and TIPA were blended under a condition shown in Table 1 to prepare a cement additive (13).

### [Example 14]

SB 300 (weight-average molecular weight=13,000, a product obtained by adding 300 moles of ethylene oxide to 1 mole of sorbitol) and N,N,N',N'-tetrakis(2-hydroxypropyl)ethylenediamine (THEDA, manufactured by Tokyo Chemical Industry Co., Ltd.) were blended under a condition shown in Table 1 to prepare a cement additive (14) .

### [Example 15]

PEG 500,000 and TIPA were blended under a condition shown in Table 1, and the resultant was further blended with gluconic acid at a ratio of 20 wt% with respect to the PEG 500,000 to prepare a cement additive (15).

### [Example 16]

PEG 500,000 and TIPA were blended under a condition shown in Table 1 to prepare a cement additive (16).

### [Example 17]

PEG 3,400 and TIPA were blended under a condition shown in Table 1 to prepare a cement additive (17).

### [Example 18]

PEG 5,000 and TIPA were blended under a condition shown in Table 1 to prepare a cement additive (18).

### [Example 19]

PEG 6,000 and TIPA were blended under a condition shown in Table 1 to prepare a cement additive (19).

### [Example 20]

The copolymer (3) and THEDA were blended under a condition shown in Table 1 to prepare a cement additive (20).

### [Example 21]

The copolymer (3) and EDIPA were blended under a condition shown in Table 1 to prepare a cement additive (21).

### [Example 22]

The copolymer (3) and THEDA were blended under a condition shown in Table 1 to prepare a cement additive (22).

### [Example 23]

The copolymer (4) and TIPA were blended under a condition shown in Table 1 to prepare a cement additive (23).

### [Example 24]

The copolymer (4) and THEDA were blended under a condition shown in Table 1 to prepare a cement additive (24).

### [Example 25]

The copolymer (4) and EDIPA were blended under a condition shown in Table 1 to prepare a cement additive (25).

### [Example 26]

The copolymer (5) and TIPA were blended under a condition shown in Table 1 to prepare a cement additive (26).

### [Example 27]

The copolymer (6) and TIPA were blended under a condition shown in Table 1 to prepare a cement additive (27).

### [Example 28]

The polymer (7) and TIPA were blended under a condition shown in Table 1 to prepare a cement additive (28).

### [Example 29]

The copolymer (8) and THEDA were blended under a condition shown in Table 1 to prepare a cement additive (29).

### [Example 30]

ESP and TIPA were blended under a condition shown in Table 1 to prepare a cement additive (30).

### [Example 31]

SB 300 and TIPA were blended under a condition shown in Table 1 to prepare a cement additive (31).

### [Comparative Example 1]

TIPA was used as a cement additive (C1) as shown in Table 2.

### [Comparative Example 2]

EDIPA was used as a cement additive (C2) as shown in Table 2.

### [Comparative Example 3]

THEDA was used as a cement additive (C3) as shown in Table 2.

### [Comparative Example 4]

PEG 500,000 was used as a cement additive (C4) as shown in Table 2.

### [Comparative Example 5]

PEG 2,000 (polyethylene glycol, manufactured by The Dow Chemical Company, weight-average molecular weight=2,000) was used as a cement additive (C5) as shown in Table 2.

### [Comparative Example 6]

PEG 3, 400 was used as a cement additive (C6) as shown in Table 2.

### [Comparative Example 7]

PEG 5,000 was used as a cement additive (C7) as shown in Table 2.

### [Comparative Example 8]

PEG 6, 000 was used as a cement additive (C8) as shown in Table 2.

### [Comparative Example 9]

The copolymer (3) was used as a cement additive (C9) as shown in Table 2.

### [Comparative Example 10]

The copolymer (4) was used as a cement additive (C10) as shown in Table 2.

### [Comparative Example 11]

The copolymer (5) was used as a cement additive (C11) as shown in Table 2.

### [Comparative Example 12]

The copolymer (6) was used as a cement additive (C12) as shown in Table 2.

### [Comparative Example 13]

The polymer (7) was used as a cement additive (C13) as shown in Table 2.

### [Comparative Example 14]

The copolymer (8) was used as a cement additive (C14) as shown in Table 2.

### [Comparative Example 15]

ESP was used as a cement additive (C15) as shown in Table 2.

### [Comparative Example 16]

SB 300 was used as a cement additive (C16) as shown in Table 2.

### [Comparative Example 17]

Diethylene glycol (DEG, manufactured by Wako Pure Chemical Industries, Ltd.) was used as a cement additive (C17) as shown in Table 2.

### [Comparative Example 18]

DEG and TIPA were blended under a condition shown in Table 2 to prepare a cement additive (C18).

### [Comparative Example 19]

PEG 2,000 and TIPA were blended under a condition shown in Table 2 to prepare a cement additive (C19).

**Table 1**

| | Cement additive | Compound (A) | Alkanolamine compound (B) | (B)/(A) |
|---|---|---|---|---|
| | | | | Wt% |
| Example 1 | Cement additive (1) | PEG 500,000 | TIPA | 20 |
| Example 2 | Cement additive (2) | PEG 3,400 | TIPA | 20 |
| Example 3 | Cement additive (3) | PEG 5,000 | EDIPA | 20 |
| Example 4 | Cement additive (4) | PEG 6,000 | EDIPA | 20 |
| Example 5 | Cement additive (5) | Copolymer (3) | TIPA | 20 |
| Example 6 | Cement additive (6) | Copolymer (3) | TIPA | 10 |
| Example 7 | Cement additive (7) | Copolymer (4) | EDIPA | 20 |
| Example 8 | Cement additive (8) | Copolymer (4) | EDIPA | 10 |
| Example 9 | Cement additive (9) | Copolymer (5) | TIPA | 20 |
| Example 10 | Cement additive (10) | Copolymer (6) | EDIPA | 20 |
| Example 11 | Cement additive (11) | Polymer (7) | TIPA | 20 |
| Example 12 | Cement additive (12) | Copolymer (8) | EDIPA | 20 |
| Example 13 | Cement additive (13) | ESP | TIPA | 20 |
| Example 14 | Cement additive (14) | SB 300 | THEDA | 20 |
| Example 15 | Cement additive (15) | PEG 500,000 | TIPA | 20 |
| Example 16 | Cement additive (16) | PEG 500,000 | TIPA | 100 |
| Example 17 | Cement additive (17) | PEG 3,400 | TIPA | 100 |
| Example 18 | Cement additive (18) | PEG 5,000 | TIPA | 100 |
| Example 19 | Cement additive (19) | PEG 6,000 | TIPA | 100 |
| Example 20 | Cement additive (20) | Copolymer (3) | THEDA | 100 |
| Example 21 | Cement additive (21) | Copolymer (3) | EDIPA | 500 |
| Example 22 | Cement additive (22) | Copolymer (3) | THEDA | 200 |
| Example 23 | Cement additive (23) | Copolymer (4) | TIPA | 100 |
| Example 24 | Cement additive (24) | Copolymer (4) | THEDA | 500 |
| Example 25 | Cement additive (25) | Copolymer (4) | EDIPA | 200 |
| Example 26 | Cement additive (26) | Copolymer (5) | TIPA | 100 |
| Example 27 | Cement additive (27) | Copolymer (6) | TIPA | 100 |
| Example 28 | Cement additive (28) | Polymer (7) | TIPA | 100 |
| Example 29 | Cement additive (29) | Copolymer (8) | THEDA | 100 |
| Example 30 | Cement additive (30) | ESP | TIPA | 100 |
| Example 31 | Cement additive (31) | SB 300 | TIPA | 100 |

**Table 2**

| | Cement additive | Compound (A) | Alkanolamine compound (B) | (B)/(A) |
|---|---|---|---|---|
| | | | | Wt% |
| Comparative Example 1 | Cement additive (C1) | - | TIPA | - |
| Comparative Example 2 | Cement additive (C2) | - | EDIPA | - |
| Comparative Example 3 | Cement additive (C3) | - | THEDA | - |
| Comparative Example 4 | Cement additive (C4) | PEG 500,000 | - | - |
| Comparative Example 5 | Cement additive (C5) | PEG 2,000 | - | - |
| Comparative Example 6 | Cement additive (C6) | PEG 3,400 | - | - |
| Comparative Example 7 | Cement additive (C7) | PEG 5,000 | - | - |
| Comparative Example 8 | Cement additive (C8) | PEG 6,000 | - | - |
| Comparative Example 9 | Cement additive (C9) | Copolymer (3) | - | - |
| Comparative Example 10 | Cement additive (C10) | Copolymer (4) | - | - |
| Comparative Example 11 | Cement additive (C11) | Copolymer (5) | - | - |
| Comparative Example 12 | Cement additive (C12) | Copolymer (6) | - | - |
| Comparative Example 13 | Cement additive (C13) | Polymer (7) | - | - |
| Comparative Example 14 | Cement additive (C14) | Copolymer (8) | - | - |
| Comparative Example 15 | Cement additive (C15) | ESP | - | - |
| Comparative Example 16 | Cement additive (C16) | SB 300 | - | - |
| Comparative Example 17 | Cement additive (C17) | DEG | - | - |
| Comparative Example 18 | Cement additive (C18) | DEG | TIPA | 20 |
| Comparative Example 19 | Cement additive (C19) | PEG 2,000 | TIPA | 20 |

### [Examples 32 to 46]

Compressive strengths were measured by using water-reducing agents and cement additives under conditions shown in Table 3. The results are shown in Table 3.

### [Examples 47 to 62]

Compressive strengths were measured by using water-reducing agents and cement additives under conditions shown in Table 4. The results are shown in Table 4.

### [Examples 63 to 66]

Compressive strengths were measured by using water-reducing agents and cement additives under conditions shown in Table 5. The results are shown in Table 5.

### [Comparative Examples 20 to 38]

Compressive strengths were measured by using water-reducing agents and cement additives under conditions shown in Table 6. The results are shown in Table 6.

### [Comparative Examples 39 to 58]

Compressive strengths were measured by using water-reducing agents and cement additives under conditions shown in Table 7. The results are shown in Table 7.

**Table 3**

| | Water-reducing agent | | Cement additive | | 28-Day compressive strength | | | |
|---|---|---|---|---|---|---|---|---|
| | | Addition amount (wt%/C) | | Addition amount (wt%/C) | N/mm² | Strength (%) with respect to Comparati ve Example 20 | Sum of strengths (% ) obtained by tests of single items | Strength (%) correspon ding to synergist ic effect |
| Example 32 | Copolymer (1) | 0.15 | Cement additive (1) | 0.06 | 80.2 | 118 | 110 | 8 |
| Example 33 | Copolymer (1) | 0.2 | Cement additive (2) | 0.06 | 75.0 | 110 | 107 | 3 |
| Example 34 | Copolymer (1) | 0.19 | Cement additive (3) | 0.06 | 74.9 | 110 | 107 | 3 |
| Example 35 | Copolymer (1) | 0.18 | Cement additive (4) | 0.06 | 77.0 | 113 | 108 | 5 |
| Example 36 | Copolymer (1) | 0.14 | Cement additive (5) | 0.06 | 77.5 | 114 | 109 | 5 |
| Example 37 | Copolymer (1) | 0.14 | Cement additive (6) | 0.055 | 77.5 | 114 | 109 | 5 |
| Example 38 | Copolymer (1) | 0.13 | Cement additive (7) | 0.06 | 78.0 | 115 | 109 | 5 |
| Example 39 | Copolymer (1) | 0.13 | Cement additive (8) | 0.055 | 77.4 | 114 | 109 | 5 |
| Example 40 | Copolymer (1) | 0.14 | Cement additive (9) | 0.06 | 78.2 | 115 | 110 | 5 |
| Example 41 | Copolymer (1) | 0.13 | Cement additive (10) | 0.06 | 78.9 | 116 | 110 | 6 |
| Example 42 | Copolymer (1) | 0.14 | Cement additive (11) | 0.06 | 78.8 | 116 | 109 | 7 |
| Example 43 | Copolymer (1) | 0.16 | Cement additive (12) | 0.06 | 78.2 | 115 | 108 | 7 |
| Example 44 | Copolymer (1) | 0.14 | Cement additive (13) | 0.06 | 78.0 | 115 | 109 | 6 |
| Example 45 | Copolymer (1) | 0.14 | Cement additive (14) | 0.06 | 78.2 | 115 | 110 | 5 |
| Example 46 | Copolymer (1) | 0.15 | Cement additive (15) | 0.07 | 84 . 8 | 125 | 116 | 9 |

**Table 4**

| | Water-reducing agent | | Cement additive | | 28-Day compressive strength | | | |
|---|---|---|---|---|---|---|---|---|
| | | Addition amount (wt%/C) | | Addition amount (wt%/C) | N/mm² | Strength (%) with respect to Comparati ve Example 20 | Sum of strengths (%) obtained by tests of single items | Strength (%) correspon ding to synergist ic effect |
| Example 47 | Copolymer (1) | 0.17 | Cement additive (16) | 0.02 | 78.2 | 115 | 110 | 5 |
| Example 48 | Copolymer (1) | 0.22 | Cement additive (17) | 0.02 | 74.8 | 110 | 107 | 3 |
| Example 49 | Copolymer (1) | 0.21 | Cement additive (18) | 0.02 | 75.0 | 110 | 107 | 3 |
| Example 50 | Copolymer (1) | 0.2 | Cement additive (19) | 0.02 | 76.4 | 112 | 108 | 5 |
| Example 51 | Copolymer (1) | 0.16 | Cement additive (20) | 0.02 | 77.4 | 114 | 110 | 4 |
| Example 52 | Copolymer (1) | 0.16 | Cement additive (21) | 0.06 | 78.0 | 115 | 110 | 5 |
| Example 53 | Copolymer (1) | 0.17 | Cement additive (22) | 0.015 | 77.0 | 113 | 110 | 3 |
| Example 54 | Copolymer (1) | 0.15 | Cement additive (23) | 0.02 | 78.2 | 115 | 110 | 5 |
| Example 55 | Copolymer (1) | 0.15 | Cement additive (24) | 0.06 | 78.0 | 115 | 110 | 5 |
| Example 56 | Copolymer (1) | 0.16 | Cement additive (25) | 0.015 | 77 . 1 | 113 | 110 | 3 |
| Example 57 | Copolymer (1) | 0.16 | Cement additive (26) | 0.02 | 79.0 | 116 | 110 | 6 |
| Example 58 | Copolymer (1) | 0.15 | Cement additive (27) | 0.02 | 78.1 | 115 | 110 | 5 |
| Example 59 | Copolymer (1) | 0.16 | Cement additive (28) | 0.02 | 78.2 | 115 | 110 | 5 |
| Example 60 | Copolymer (1) | 0.18 | Cement additive (29) | 0.02 | 77.6 | 114 | 109 | 5 |
| Example 61 | Copolymer (1) | 0.16 | Cement additive (30) | 0.02 | 76.9 | 113 | 108 | 5 |
| Example 62 | Copolymer (1) | 0.16 | Cement additive (31) | 0.02 | 77.5 | 114 | 109 | 5 |

**Table 5**

| | Water-reducing agent | | Cement additive | | 28-Day compressive strength | | | |
|---|---|---|---|---|---|---|---|---|
| | | Addition amount (wt%/C) | | Addition amount (wt%/C) | N/mm² | Strength (%) with respect to Comparati ve Example 21 | Sum of strengths (%) obtained by tests of single items | Strength (%) correspon ding to synergist ic effect |
| Example 63 | Copolymer (2) | 0.11 | Cement additive (16) | 0.02 | 77.2 | 114 | 110 | 4 |
| Example 64 | Copolymer (2) | 0.12 | Cement additive (17) | 0.02 | 76 | 112 | 107 | 5 |
| Example 65 | Copolymer (2) | 0.11 | Cement additive (20) | 0.02 | 77.5 | 114 | 110 | 4 |
| Example 66 | Copolymer (2) | 0.11 | Cement additive (26) | 0.02 | 77.1 | 113 | 110 | 4 |

**Table 6**

| | Water-reducing agent | | Cement additive | | 28-Day compressive strength | |
|---|---|---|---|---|---|---|
| | | Addition amount (wt%/C) | | Addition amount (wt%/C) | N/mm² | Strength (%) with respect to Comparative Example 20 |
| Comparative Example 20 | Copolymer (1) | 0.24 | - | - | 68.0 | 100 |
| Comparative Example 21 | Copolymer (2) | 0.14 | - | - | 68.0 | 100 |
| Comparative Example 22 | Copolymer (1) | 0.24 | Cement additive (C1) | 0.05 | 72.1 | 106 |
| Comparative Example 23 | Copolymer (1) | 0.24 | Cement additive (C1) | 0.01 | 72.0 | 106 |
| Comparative Example 24 | Copolymer (1) | 0.24 | Cement additive (C1) | 0.005 | 71.9 | 106 |
| Comparative Example 25 | Copolymer (1) | 0.24 | Cement additive (C2) | 0.05 | 72.2 | 106 |
| Comparative Example 26 | Copolymer (1) | 0.24 | Cement additive (C2) | 0.01 | 72.1 | 106 |
| Comparative Example 27 | Copolymer (1) | 0.24 | Cement additive (C2) | 0.005 | 71.9 | 106 |
| Comparative Example 28 | Copolymer (1) | 0 .24 | Cement additive (C3) | 0.05 | 72.0 | 106 |
| Comparative Example 29 | Copolymer (1) | 0.24 | Cement additive (C3) | 0.01 | 72.0 | 106 |
| Comparative Example 30 | Copolymer (1) | 0.24 | Cement additive (C3) | 0.005 | 71.9 | 106 |
| Comparative Example 31 | Copolymer (1) | 0.135 | Cement additive (C4) | 0.05 | 70.7 | 104 |
| Comparative Example 32 | Copolymer (1) | 0.21 | Cement additive (C5) | 0.05 | 68.0 | 100 |
| Comparative Example 33 | Copolymer (1) | 0.2 | Cement additive (C6) | 0.05 | 68.8 | 101 |
| Comparative Example 34 | Copolymer (1) | 0.19 | Cement additive (C7) | 0.05 | 68.7 | 101 |
| Comparative Example 35 | Copolymer (1) | 0.18 | Cement additive (C8) | 0.05 | 69.6 | 102 |
| Comparative Example 36 | Copolymer (1) | 0.14 | Cement additive (C9) | 0.05 | 70.0 | 103 |
| Comparative Example 37 | Copolymer (1) | 0.14 | Cement additive (C10) | 0.05 | 70.2 | 103 |
| Comparative Example 38 | Copolymer (1) | 0.14 | Cement additive (C11) | 0.05 | 70.6 | 104 |

**Table 7**

| | Water-reducing agent | | Cement additive | | 28-Day compressive strength | |
|---|---|---|---|---|---|---|
| | | Addition amount (wt%/C) | | Addition amount (wt%/C) | N/mm² | Strength (%) with respect to Comparative Example 20 |
| Comparative Example 39 | Copolymer (1) | 0.14 | Cement additive (C12) | 0.05 | 70.7 | 104 |
| Comparative Example 40 | Copolymer (1) | 0.14 | Cement additive (C13) | 0.05 | 69.9 | 103 |
| Comparative Example 41 | Copolymer (1) | 0.14 | Cement additive (C14) | 0.05 | 69.4 | 102 |
| Comparative Example 42 | Copolymer (1) | 0.14 | Cement additive (C15) | 0.05 | 69.9 | 103 |
| Comparative Example 43 | Copolymer (1) | 0.14 | Cement additive (C16) | 0.05 | 70.6 | 104 |
| Comparative Example 44 | Copolymer (1) | 0.22 | Cement additive (C17) | 0.05 | 61.2 | 90 |
| Comparative Example 45 | Copolymer (1) | 0.22 | Cement additive (C18) | 0.06 | 64.6 | 95 |
| Comparative Example 46 | Copolymer (1) | 0.21 | Cement additive (C19) | 0.06 | 71.2 | 105 |
| Comparative Example 47 | Copolymer (1) | 0.17 | Cement additive (C4) | 0.01 | 70.7 | 104 |
| Comparative Example 48 | Copolymer (1) | 0.22 | Cement additive (C6) | 0.01 | 68.6 | 101 |
| Comparative Example 49 | Copolymer (1) | 0.21 | Cement additive (C7) | 0.01 | 68.7 | 101 |
| Comparative Example 50 | Copolymer (1) | 0.2 | Cement additive (C8) | 0.01 | 69.3 | 102 |
| Comparative Example 51 | Copolymer (1) | 0.16 | Cement additive (C9) | 0.01 | 70.7 | 104 |
| Comparative Example 52 | Copolymer (1) | 0.15 | Cement additive (C10) | 0.01 | 70.7 | 104 |
| Comparative Example 53 | Copolymer (1) | 0.16 | Cement additive (C11) | 0.01 | 70.7 | 104 |
| Comparative Example 54 | Copolymer (1) | 0.15 | Cement additive (C12) | 0.01 | 70.5 | 104 |
| Comparative Example 55 | Copolymer (1) | 0.16 | Cement additive (C13) | 0.01 | 70.7 | 104 |
| Comparative Example 56 | Copolymer (1) | 0.17 | Cement additive (C14) | 0.01 | 70.1 | 103 |
| Comparative Example 57 | Copolymer (1) | 0.16 | Cement additive (C15) | 0.01 | 69.4 | 102 |
| Comparative Example 58 | Copolymer (1) | 0.16 | Cement additive (C16) | 0.01 | 70.2 | 103 |

As shown in Tables 6 and 7, when the 28-day compressive strength of Comparative Example 20 (to which no component for a cement additive had been added) was defined as 100, the 28-day compressive strengths of Comparative Examples 22 to 30 to each of which only the alkanolamine compound (B) had been added as a cement additive were each 106, and the 28-day compressive strengths of Comparative Examples 31, 33 to 43, and 47 to 58 to each of which only the compound (A) had been added as a cement additive were from 100 to 104. In addition, the 28-day compressive strength of Comparative Example 44 using, as a cement additive, diethylene glycol that did not correspond to the compound (A) specified in the present invention was 90. Further, the 28-day compressive strength of Comparative Example 32 using, as a cement additive, PEG 2,000 (polyethylene glycol, manufactured by The Dow Chemical Company, weight-average molecular weight=2,000) that did not correspond to the compound (A) specified in the present invention was 100.

Meanwhile, as shown in Tables 3 to 5, the 28-day compressive strengths of Examples each using the cement additive of the present invention significantly increased as compared to those of Comparative Examples 20 and 21 (blanks), and showed significant synergistic effects.

### Industrial Applicability

The cement additive of the present invention is suitably used in a cement composition, such as mortar or concrete.

## Claims

1. A cement additive, comprising:
a compound (A) having a weight-average molecular weight of more than 3,000, and having a structure in which 5 moles or more of an alkylene oxide is added to 1 mole of a polyhydric alcohol; and
an alkanolamine compound (B).

2. The cement additive according to claim 1, wherein a content of a total amount of the compound (A) and the alkanolamine compound (B) in the cement additive is from 50 wt% to 100 wt%.

3. The cement additive according to claim 2, wherein the content is from 95 wt% to 100 wt%.

4. The cement additive according to claim 1, wherein a ratio of the alkanolamine compound (B) to the compound (A) is from 1 wt% to 10,000 wt%.

5. The cement additive according to claim 4, wherein the ratio is from 5 wt% to 300 wt%.

6. The cement additive according to claim 5, wherein the ratio is from 10 wt% to 150 wt%.

7. The cement additive according to claim 1, wherein the weight-average molecular weight of the compound (A) is from 4,000 to 10,000,000.

8. The cement additive according to claim 7, wherein the weight-average molecular weight is from 10,000 to 700,000.

9. The cement additive according to claim 1, wherein the number of moles added of the alkylene oxide is from 10 to 100,000.

10. The cement additive according to claim 9, wherein the number of moles added of the alkylene oxide is from 30 to 5,000.

11. The cement additive according to claim 1, wherein the compound (A) comprises at least one kind selected from polyethylene glycol, a copolymer having a structural unit derived from an alkylene oxide adduct of methacrylic acid, an alkylene oxide adduct of sorbitol, a copolymer having a structural unit derived from an alkylene oxide adduct of 3-methyl-3-butenyl alcohol, and an adduct of an alkylene oxide to active hydrogen bonded to an amino group of polyethyleneimine.

12. The cement additive according to claim 1, wherein the alkanolamine compound (B) comprises at least one kind selected from triisopropanolamine, N,N,N',N'-tetrakis(2-hydroxypropyl)ethylenediamine, and diisopropanolethanolamine.

13. A cement composition, comprising the cement additive of claim 1.

14. A raw material for a cement additive, the raw material comprising the compound (A) of any one of claims 1 to 12, wherein the raw material is used in the cement additive of any one of claims 1 to 12.

15. A raw material for a cement additive, the raw material comprising the alkanolamine compound (B) of any one of claims 1 to 12, wherein the raw material is used in the cement additive of any one of claims 1 to 12.
